# EUROPÄISCHE PATENTSCHRIFT

(11) **EP 3 743 964 B1**
(45) Veröffentlichungstag und Bekanntmachung des Hinweises auf die Patenterteilung: **22.05.2024**
(21) Anmeldenummer: 19701452.5
(22) Anmeldetag: 11.01.2019
(51) Int. Cl.: H01R 13/506, H01R 13/516, B60L 53/16, B60K 15/04, H01R 13/74

(54) **HALTEVORRICHTUNG FÜR EINE KRAFTFAHRZEUG-LADEEINRICHTUNG**
HOLDING ASSEMBLY FOR AN AUTOMOTIVE CHARGING SYSTEM
DISPOSITIF DE MAINTIEN POUR UN ÉQUIPEMENT DE CHARGE DE VÉHICULE AUTOMOBILE

(30) Priorität: 22.01.2018 DE 102018101325
(43) Veröffentlichungstag der Anmeldung: 02.12.2020
(73) Patentinhaber: Phoenix Contact e-Mobility GmbH, 32816 Schieder-Schwalenberg (DE)
(72) Erfinder: FELDNER, Ralf, 32805 Horn-Bad Meinberg (DE); GARTH, Carsten, 32657 Lemgo (DE); SCHLÜTER, Kai, 32676 Lügde (DE)
(74) Vertreter: Meyer-Graefe, Karsten
(86) Internationale Anmeldenummer: PCT/EP2019/050605
(87) Internationale Veröffentlichungsnummer: WO 2019/141590

(56) Entgegenhaltungen:
- EP-A1- 2 955 794
- WO-A1-2014/053221
- DE-A1- 19 749 852
- DE-A1-102011 004 834
- DE-A1-102014 110 466
- DE-B3-102009 011 388
- US-A1- 2009 029 584

## Beschreibung

Die Erfindung betrifft eine Haltevorrichtung zum Halten einer elektrischen Ladeeinrichtung, welche eine Grundplatte mit einer Oberseite und wenigstens einem Rasthaken, der sich ausgehend von der Oberseite der Grundplatte erstreckt und der zur Verrastung mit einer Rastkontur der Ladeeinrichtung vorgesehen ist, aufweist. Die Erfindung betrifft ferner ein Haltesystem und ein Kraftfahrzeug jeweils umfassend eine Haltevorrichtung sowie ein Verfahren zur Montage einer Ladeeinrichtung unter Verwendung einer Haltevorrichtung.

Eine entsprechende Haltevorrichtung ist beispielsweise aus der EP 2 955 794 A1 bekannt.

Wie in der WO 2014/053221 A1 beschrieben, können für Kraftfahrzeuge mit Elektroantrieb unterschiedlich konfigurierte Ladeeinrichtungen erforderlich sein. Ein solches Erfordernis ergibt sich beispielsweise aus unterschiedlichen länderspezifischen Standards bezüglich der Ladestationen oder unterschiedlichen Fahrzeugsystemen. Gemäß der in der WO 2014/053221 A1 beschriebenen Technik ist eine Ladeeinrichtung als Modulsystem ausgebildet. Dabei ist ein universell verwendbares mittleres Modul zur Befestigung am Fahrzeug vorgesehen. Dieses mittlere Modul weist sowohl eingangs- als auch ausgangsseitig jeweils eine Schnittstelle zum Anbringen eines aus unterschiedlichen Modulen auswählbaren Endmoduls auf.

Die in der WO 2014/053221 A1 beschriebene Technik hat zum Nachteil, dass durch die modulare Ausführung eine kompakte Bauweise der Ladeeinrichtung erschwert ist. Zudem ist für alle Anwendungen der Ladeeinrichtung dieselbe Befestigungsweise des mittleren Moduls an einer Karosserie vorgesehen, wodurch eine Optimierung für unterschiedliche Fahrzeugtypen erschwert ist. Zudem ist das mittlere Modul der Ladeeinrichtung unmittelbar an der Karosserie zu befestigen, wodurch eine Montage der Ladeeinrichtung erschwert ist.

Die DE 10 2011 004 834 A1 beschreibt dagegen eine Ladeeinrichtung für ein Elektrofahrzeug, bei der eine Adapterplatte vorgesehen ist, um ein genormtes elektrisches Bauteil an verschiedenen Fahrzeugkarosserien anzubringen.

Die in der WO 2014/053221 A1 beschriebene Technik hat zum Nachteil, dass die Adapterplatte mit dem elektrischen Bauteil zu verschrauben ist, wodurch eine Montage der Ladeeinrichtung ebenfalls erschwert ist.

Aufgabe der vorliegenden Erfindung ist es, eine Haltevorrichtung für eine Ladeeinrichtung zur Verfügung zu stellen, die eine hohe Varianz in der Anwendung ermöglicht und bei der Zugleich eine Montage der Ladeeinrichtung vereinfacht ist.

Diese Aufgabe wird durch einen Gegenstand mit den Merkmalen des Anspruchs 1 gelöst.

Demnach umfasst die Haltevorrichtung einen Sicherungsrahmen, der zwischen einer ersten Position und einer zweiten Position beweglich an der Grundplatte angebracht ist und der dazu ausgebildet ist, in der ersten Position den Rasthaken in eine geöffnete Stellung zu spannen und in der zweiten Position den Rasthaken in einer geschlossenen Stellung zu sichern.

Die Ladeeinrichtung kann eine Ladeeinrichtung für ein elektrisch angetriebenes Kraftfahrzeug sein.

Der Rasthaken kann sich zumindest im Wesentlichen senkrecht zu der Oberseite der Grundplatte erstrecken. Die Grundplatte kann ferner mehrere Rasthaken aufweisen. Die Grundplatte kann zudem wenigstens ein Befestigungselement zur Befestigung der Haltevorrichtung aufweisen. Das Befestigungselement kann dabei zur Befestigung der Haltevorrichtung in einem Kraftfahrzeug ausgebildet sein. Insbesondere kann das Befestigungselement zur Befestigung der Haltevorrichtung an einer Karosserie eines Kraftfahrzeugs ausgebildet sein.

Die Grundplatte kann zudem wenigstens einen Durchbruch aufweisen. Der Durchbruch kann dazu ausgebildet sein, einen Zugang zu der Ladeeinrichtung von einer Unterseite der Grundplatte aus zu gestatten, wenn die Ladeeinrichtung in der Haltevorrichtung gehalten ist.

Der Sicherungsrahmen kann wenigstens eine Spannkontur zum Spannen des Rasthakens in die geöffnete Stellung aufweisen. Außerdem kann der Sicherungsrahmen wenigstens eine Sicherungskontur zum Sichern des Rasthakens in der geschlossenen Stellung umfassen. Außerdem kann der Sicherungsrahmen wenigstens eine Aussparung aufweisen. Dabei kann der Sicherungsrahmen derart an der Grundplatte angebracht sein, dass der Rasthaken wenigstens teilweise in die Aussparung ragt, wenn sich der Sicherungsrahmen in der ersten Position befindet.

Eine Bewegung des Sicherungsrahmens von der ersten Position zu der zweiten Position kann einer Bewegung des Sicherungsrahmens zumindest im Wesentlichen senkrecht zu der Oberseite entsprechen. Dabei kann die Bewegung einer Bewegung in einer von der Oberseite der Grundplatte fortweisenden Richtung entsprechen.

Der Sicherungsrahmen kann wenigstens eine Bedienlasche zum manuellen Bewegen des Sicherungsrahmens von der ersten Position in die zweite Position umfassen. Außerdem kann der Sicherungsrahmen wenigstens einen Verriegelungsrasthaken umfassen, der ausgebildet ist zur Verrastung mit einer Verriegelungsrastkontur der Ladeeinrichtung, wenn sich der Sicherungsrahmen in der zweiten Position befindet. Der Verriegelungsrasthaken kann dazu vorgesehen sein, den Sicherungsrahmen in der zweiten Position zu verriegeln.

Gemäß einem weiteren Aspekt wird ein Haltesystem zum Halten einer elektrischen Ladeeinrichtung vorgestellt. Das Haltesystem umfasst eine Haltevorrichtung der hier vorgestellten Art und eine Ladeeinrichtung mit wenigstens einer Rastkontur. Wenigstens ein Rasthaken der Haltevorrichtung ist zur Verrastung mit der Rastkontur der Ladeeinrichtung ausgebildet.

Die Ladeeinrichtung kann den Durchbruch der Grundplatte wenigstens teilweise durchragen, wenn die Ladeeinrichtung mittels der Haltevorrichtung gehalten ist.

Die Ladeeinrichtung kann wenigstens ein Kontaktelement umfassen. Das Kontaktelement kann an einer der Oberseite der Grundplatte zugewandten Seite der Ladeeinrichtung angeordnet sein. Zudem kann das Kontaktelement zur Kontaktierung mittels einer Ladestromquelle vorgesehen sein.

Der wenigstens eine Rasthaken der Haltevorrichtung kann sich parallel zu einer Steckrichtung der Ladeeinrichtung erstrecken.

Gemäß einem weiteren Aspekt wird ein Kraftfahrzeug beschrieben. Das Kraftfahrzeug umfasst eine Haltevorrichtung der hier vorgestellten Art und/oder ein Haltesystem der hier vorgestellten Art.

Gemäß einem weiteren Aspekt wird ein Verfahren zur Montage einer Ladeeinrichtung in einem Kraftfahrzeug vorgestellt. Das Verfahren umfasst Bereitstellen einer Haltevorrichtung, die eine Grundplatte umfasst mit einer Oberseite und wenigstens einem Rasthaken, der sich ausgehend von der Oberseite der Grundplatte erstreckt und der zur Verrastung mit einer Rastkontur der Ladeeinrichtung vorgesehen ist, und einen Sicherungsrahmen, der zwischen einer ersten Position und einer zweiten Position beweglich an der Grundplatte angebracht ist und der dazu ausgebildet ist, in der ersten Position den Rasthaken in eine geöffnete Stellung zu spannen und in der zweiten Position den Rasthaken in einer geschlossenen Stellung zu sichern. Das Verfahren umfasst ferner Bereitstellen einer Ladeeinrichtung mit wenigstens einer Rastkontur, wobei der wenigstens eine Rasthaken der Haltevorrichtung zur Verrastung mit der Rastkontur der Ladeeinrichtung ausgebildet ist; Befestigen der Haltevorrichtung an einer Karosserie des Kraftfahrzeugs; Anordnen der Ladeeinrichtung in der Haltevorrichtung, wobei sich der Sicherungsrahmen in der ersten Position befindet, und Bewegen des Sicherungsrahmens in die zweite Position zum Bilden einer gesicherten Verrastung des Rasthakens mit der Rastkontur.

Das Anordnen der Ladeeinrichtung in der Haltevorrichtung kann ferner ein Vorverrasten der Haltevorrichtung und der Ladeeinrichtung mittels eines Vorrasthakens der Haltevorrichtung und einer Vorrastkontur der Ladeeinrichtung umfassen.

Weitere Merkmale, Aufgaben und Vorzüge der Erfindung werden aus den Zeichnungen und der ausführlichen Beschreibung deutlich. Es zeigen:
- Fig. 1: eine schematische Darstellung einer perspektivischen Ansicht einer Haltevorrichtung zum Halten einer elektrischen Ladeeinrichtung gemäß einem Ausführungsbeispiel;
- Fig. 2: eine Explosivdarstellung der Haltevorrichtung gemäß einem Ausführungsbeispiel;
- Fign. 3A - 3C: schematische Darstellungen eines Ausschnitts einer Querschnittsansicht der Haltevorrichtung mit verschiedenen Positionen des Sicherungsrings gemäß einem Ausführungsbeispiel;
- Fig. 4: eine Explosivdarstellung eines Haltesystems gemäß einem Ausführungsbeispiel;
- Fign. 5A - 5C: schematische Darstellungen verschiedener Ansichten eines Haltesystems gemäß einem Ausführungsbeispiel;
- Fig. 6: eine schematische Darstellung eines Kraftfahrzeugs mit einem Haltesystem gemäß einem Ausführungsbeispiel; und
- Fig. 7: ein Flussdiagramm eines Verfahrens zur Montage einer Ladeeinrichtung in einem Kraftfahrzeug gemäß einem Ausführungsbeispiel.

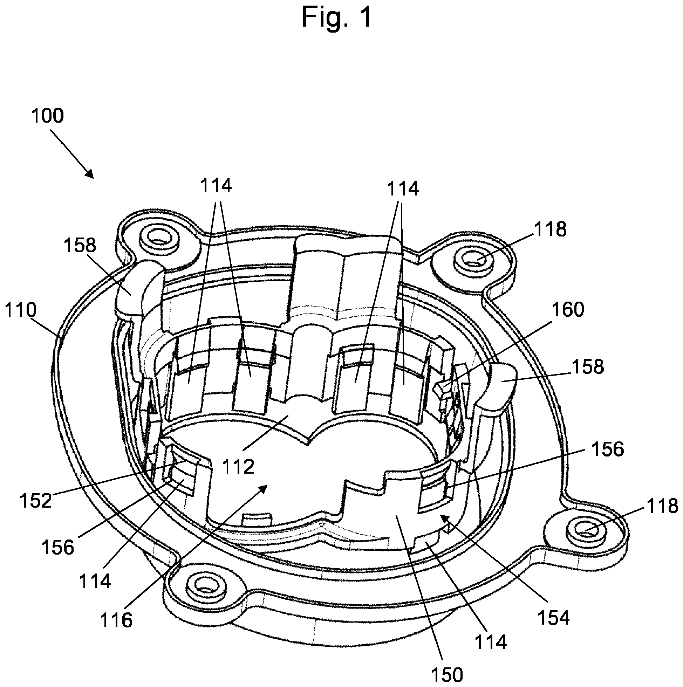

Fig. 1 zeigt eine schematische Darstellung einer Haltevorrichtung 100 zum Halten einer elektrischen Ladeeinrichtung (nicht dargestellt). Die Haltevorrichtung 100 ist beispielsweise zum Halten einer Ladeeinrichtung für ein elektrisch angetriebenes Kraftfahrzeug vorgesehen.

Die Haltevorrichtung 100 umfasst eine Grundplatte 110, an deren Oberseite 112 mehrere Rasthaken 114 angeordnet sind. Die Rasthaken 114 sind zur Verrastung mit einer Rastkontur der Ladeeinrichtung ausgebildet, wenn die Ladeeinrichtung in der Haltevorrichtung 100 gehalten ist. In dem gezeigten Beispiel sind die Rasthaken 114 um einen Durchbruch 116 in der Grundplatte 110 angeordnet. Der Durchbruch 116 ermöglicht einen Zugang zu einer der Oberseite 112 zugewandten Seite der Ladeeinrichtung von einer Unterseite der Haltevorrichtung 100 aus. Außerdem umfasst die Grundplatte 110 mehrere Befestigungselemente 118 zur Befestigung der Haltevorrichtung 100 sowie einer darin gegebenenfalls gehaltenen Ladeeinrichtung, beispielsweise an der Karosserie eines elektrisch angetriebenen Kraftfahrzeugs.

Die Haltevorrichtung 100 umfasst ferner einen Sicherungsrahmen 150. Der Sicherungsrahmen 150 ist beweglich an der Grundplatte 110 angebracht. In dem gezeigten Beispiel umgibt der Sicherungsrahmen 150 im Wesentlichen die Rasthaken 114, wobei der Sicherungsrahmen 150 in Bezug auf die Grundplatte 110 in senkrechter Richtung beweglich ist.

Der Sicherungsrahmen 150 umfasst mehrere Bedienlaschen 158. Die Bedienlaschen 158 erleichtern ein manuelles Bewegen des Sicherungsrahmens 150 in Bezug auf die Oberseite 112 der Grundplatte 110. Zudem weist der Sicherungsrahmen 150 wenigstens einen Verriegelungsrasthaken 160 auf, der zum Verrasten mit einer Verriegelungsrastkontur der Ladeeinrichtung vorgesehen ist.

Der Sicherungsrahmen 150 weist im Bereich jedes der Rasthaken 114 eine Aussparung 156 auf sowie angrenzend an jede der Aussparungen 156 jeweils eine Spannkontur 152 und eine Sicherungskontur 154. Der Sicherungsrahmen 150 ist zudem so angeordnet, dass in der dargestellten Position jeder der Rasthaken 114 teilweise in eine entsprechende Aussparung 156 des Sicherungsrahmens 150 ragt. Dabei liegt jeder Rasthaken 114 zudem mit einer Außenseite an die Sicherungskontur 154 an. Außerdem liegt jeder der Rasthaken 114 mit der Innenseite des in die Aussparung 156 ragenden Abschnitts an eine entsprechende Spannkontur 152 des Sicherungsrahmens 150 an.

Der Sicherungsrahmen 150 ist in Bezug auf die Grundplatte 110 zwischen einer ersten Position und einer zweiten Position beweglich, etwa durch Ziehen an den Bedienenlaschen 158. In einer ersten Position ist der Sicherungsrahmen 150 abgesenkt. Dabei liegt der Sicherungsrahmen 150 beispielsweise an die Oberseite 112 der Grundplatte 110 an. In dieser Position bewirkt jede der Spannkonturen 152, dass der dort jeweils anliegende Rasthaken 114 nach außen in eine geöffnete Stellung gespannt wird. Zu diesem Zweck weist in dem gezeigten Beispiel jede der Spannkonturen 152 ein nach außen schräges Profil auf, das einen oberen Abschnitt des Rasthakens 114 nach außen drückt. Dabei bietet zudem jede der Aussparungen 156 den zum Aufspannen des Rasthakens 114 in die geöffnete Stellung erforderlichen Raum.

Die erste Position des Sicherungsrahmens 150 ermöglicht ein vereinfachtes, beispielsweise kraftloses, Einsetzen einer Ladeeinrichtung in die Haltevorrichtung 100. Insbesondere braucht bei der Montage die zum Öffnen der Rasthaken 114 erforderliche Kraft nicht oder nur teilweise erbracht zu werden. Das Einsetzen kann beispielsweise nach einer Befestigung der Haltevorrichtung 100 an einer Fahrzeugkarosserie erfolgen.

Der Sicherungsrahmen 150 kann aus der ersten in eine zweite Position bewegt werden, beispielsweise durch Ziehen an einer oder mehreren der Bedienlaschen 158. In der zweiten Position befindet sich der Sicherungsrahmen 150 weiter entfernt von der Oberseite 112 der Grundplatte 110. Gleichzeitig ist der Sicherungsrahmen 150 dabei teilweise von den Rasthaken 114 abgezogen. Dies bewirkt, dass die Rasthaken 114 in der zweiten Position durch die Spannkonturen 152 weniger stark aufgebogen sind als in der ersten Position. Bei Bewegen des Sicherungsrahmens 150 von der ersten in die zweite Position gehen die Rasthaken 114 dadurch in eine geschlossene Stellung über. Dazu können die Rasthaken 140 beispielsweise aus elastischem Material, beispielsweise elastischem Kunststoff, bestehen und in der geschlossenen Stellung vorgespannt sein. In der zweiten Position des Sicherungsrahmens liegt außerdem die Sicherungskontur 154 äußerlich angrenzend an einen oberen Bereich der Rasthaken 114 an. Die Sicherungskontur 154 verhindert so ein Aufbiegen der Rasthaken 114 nach außen. Dadurch sind die Rasthaken 114 in ihrer geschlossenen Stellung gesichert.

Ist eine geeignete Ladeeinrichtung in die Haltevorrichtung 100 eingesetzt worden, während sich der Sicherungsrahmen 150 in der ersten Position befand, führt auf die beschriebene Weise ein Bewegen des Sicherungsrahmens 150 in die zweite Position zu einem Verrasten der Rasthaken 140 mit einer Verriegelungskontur der Ladeeinrichtung. Gleichzeitig wird die so gebildete Verrastung durch den Sicherungsrahmen 150 gegen ungewünschtes Lösen gesichert. Darüber hinaus gestattet der Verriegelungsrasthaken 160 durch Verrasten mit einer Verriegelungsrastkontur der Ladeeinrichtung ein Verriegeln des Sicherungsrahmens 150 in der zweiten Position. Dadurch kann auch ein unerwünschtes Bewegen des Sicherungsrahmens 150 zurück in die erste Position und damit gegebenenfalls ein unerwünschtes Öffnen der Rasthaken 114 vermieden werden.

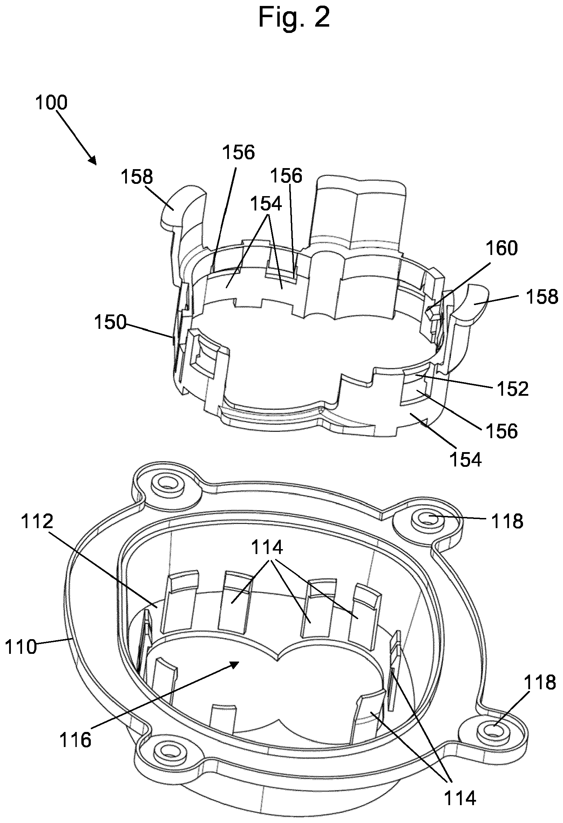

Fig. 2 zeigt eine Explosivdarstellung der Haltevorrichtung 100. Die Grundplatte 110 ist dabei getrennt von dem Sicherungsrahmen 150 dargestellt. Gleiche Bezugszeichen wie in Fig. 1 bezeichnen hier wie im Folgenden gleiche Merkmale der Haltevorrichtung 100.

In Fig. 2 sind insbesondere die Aussparungen 156 in dem Sicherungsrahmen 150 sowie die jeweils an eine Aussparung 156 angrenzenden Konturen aus Spannkontur 152 und Sicherungskontur 154 erkennbar. Zudem ist die Anordnung des Verriegelungsrasthakens 160 an dem Sicherungsrahmen 150 erkennbar. Der Verriegelungsrasthaken 160 bewirkt eine Verrastung des Sicherungsrahmens 150 gegenüber einer eingesetzten Ladeeinrichtung, wohingegen die Rasthaken 114 zur Verrastung der Grundplatte 110 gegenüber der Ladeeinrichtung dienen.

Erkennbar ist außerdem, dass in dem gezeigten Beispiel die Oberseite 112 der Grundplatte 110 gegenüber den Befestigungselementen 118 abgesenkt ist. Dies begünstigt beispielsweise einen Schutz der gehaltenen Ladeeinrichtung durch die Grundplatte 110 oder eine Montage der Haltevorrichtung 110 in einem Kraftfahrzeug. In anderen Beispielen ist die Grundplatte 110 dagegen auf andere Weise ausgebildet, beispielsweise mit einer von der dargestellten abgesenkten Anordnung der Oberseite 112 abweichenden Anordnung der Oberseite 112 gegenüber den Befestigungselementen 118. Weitere Beispiele der Haltevorrichtung 100 weisen zudem von den dargestellten Befestigungselementen 118 abweichende Befestigungselemente auf.

Die Haltevorrichtung 100 ist für eine Montage, beispielsweise in einem elektrisch angetriebenen Kraftfahrzeug, in beliebiger Ausrichtung verwendbar. Die dargestellte Ausrichtung sowie die vorliegend verwendeten räumlichen Begriffe, wie "Oberseite", "oberhalb", "oben", "Unterseite", "unten", "senkrecht" und so weiter, dienen allein der Veranschaulichung von Positionen und Ausrichtungen der beschriebenen Elemente in Bezug aufeinander und sollen nicht im Sinne einer Beschränkung für eine Anordnung oder Ausrichtung der Haltevorrichtung im Ganzen verstanden werden. Insbesondere weist eine zur Verwendung mit der Haltevorrichtung 100 vorgesehene Ladeeinrichtung in einigen Beispielen Kontaktelemente zur Kontaktierung durch eine Ladestromquelle an einer zu der Oberseite 112 der Grundplatte 110 weisenden Seite der Ladeeinrichtung auf. In einigen dieser Beispiele ist zudem eine Montage der Haltevorrichtung in einem Kraftfahrzeug derart vorgesehen, dass der Durchbruch 116 und die dadurch zugänglichen Kontaktelemente der Ladeeinrichtung zu einer Seite, beispielsweise zu einer Vorderseite, des Kraftfahrzeugs weisen.

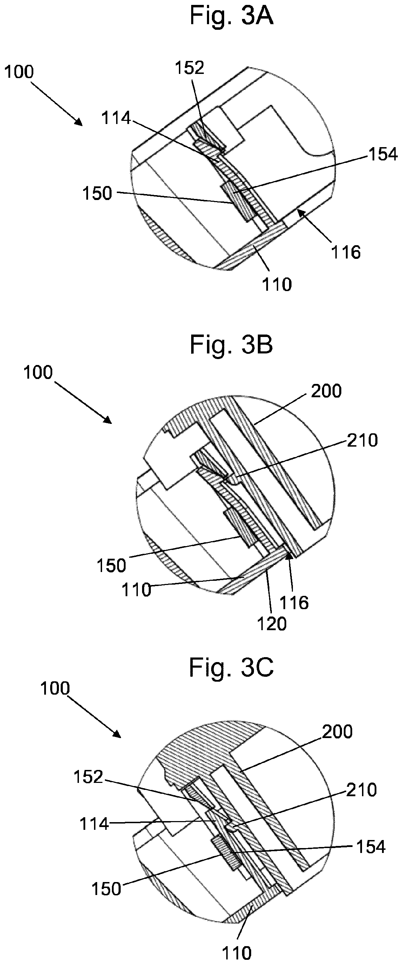

Fign. 3A bis 3C zeigen einen Ausschnitt einer Querschnittsansicht der Haltevorrichtung 100 in unterschiedlichen Positionen sowie im Zusammenhang mit einer Montage einer elektrischen Ladeeinrichtung.

Fig. 3A zeigt die Haltevorrichtung 100 im Bereich eines der Rasthaken 114. Der Sicherungsrahmen 150 befindet sich dabei in der ersten Position, d. h. nahe der Oberseite der Grundplatte 110. Dabei ist erkennbar, dass der Rasthaken 114 mittels der Spannkontur 152 bei dieser Position des Sicherungsrahmens 150 in eine geöffnete Stellung gespannt wird. Wie im Zusammenhang mit Fig. 1 beschrieben, ragt ein oberer Abschnitt des Rasthakens 114 dabei teilweise in eine Aussparung des Sicherungsrahmens 150. Zudem ist erkennbar, dass die Sicherungskontur 154 bei dieser Position des Sicherungsrahmens 150 ein Aufbiegen des Rasthakens 114 gestattet, da die Sicherungskontur 154 nicht im oberen Bereich des Rasthakens 114 an der Außenseite des Rasthakens 114 anliegt.

Fig. 3B zeigt die Haltevorrichtung 100 in derselben Position wie in Fig. 3A. Fig. 3B zeigt jedoch außerdem eine in die Haltevorrichtung 100 eingesetzte Ladeeinrichtung 200. Die Ladeeinrichtung 200 umfasst in dem Bereich nahe dem Rasthaken 114 eine Rastkontur 210, die zum Verrasten mit dem Rasthaken 114 ausgebildet ist. Durch die geöffnete Stellung des Rasthakens 114 ist ein Einsetzen der Ladeeinrichtung 200 nahezu ohne Kraftaufwand möglich. In dem dargestellten Beispiel kommt es zu einem leichten Vorverrasten der Rastkontur 210 mit dem Rasthaken 114 und/oder dem Sicherungsrahmen 150. Dies erleichtert in einigen Beispielen eine Montage der Ladeeinrichtung 200. In dem gezeigten Beispiel ist die Ladeeinrichtung 200 so gestaltet, dass sie teilweise durch den Durchbruch 116 der Grundplatte 110 ragt.

Fig. 3C zeigt die Haltevorrichtung 100 mit eingesetzter Ladeeinrichtung 200, wie im Zusammenhang mit Fig. 3B beschrieben. Gegenüber der in Fig. 3B dargestellten Anordnung, befindet sich der Sicherungsrahmen 150 jedoch in der zweiten Position. Wie im Zusammenhang mit Fig. 1 beschrieben, bewirkt ein Bewegen des Sicherungsrahmens 150 aus der ersten in die zweite Position eine Verrastung des Rasthakens 114 mit der Rastkontur 210 sowie gleichzeitig ein Sichern der Verrastung durch die Sicherungskontur 154, die nun in einem höher liegenden Abschnitt an der Außenseite des Rasthakens 114 anliegt und so ein Aufbiegen des Rasthakens 114 verhindert. Bei Bewegen des Sicherungsrahmens 150 in die zweite Position erfolgt außerdem eine Verrastung des Verriegelungsrasthakens 160 mit einer Verriegelungsrastkontur der Ladeeinrichtung 200. Auf diese Weise ist der Sicherungsrahmen 150 gegen ungewolltes Bewegen in der zweiten Position verriegelt.

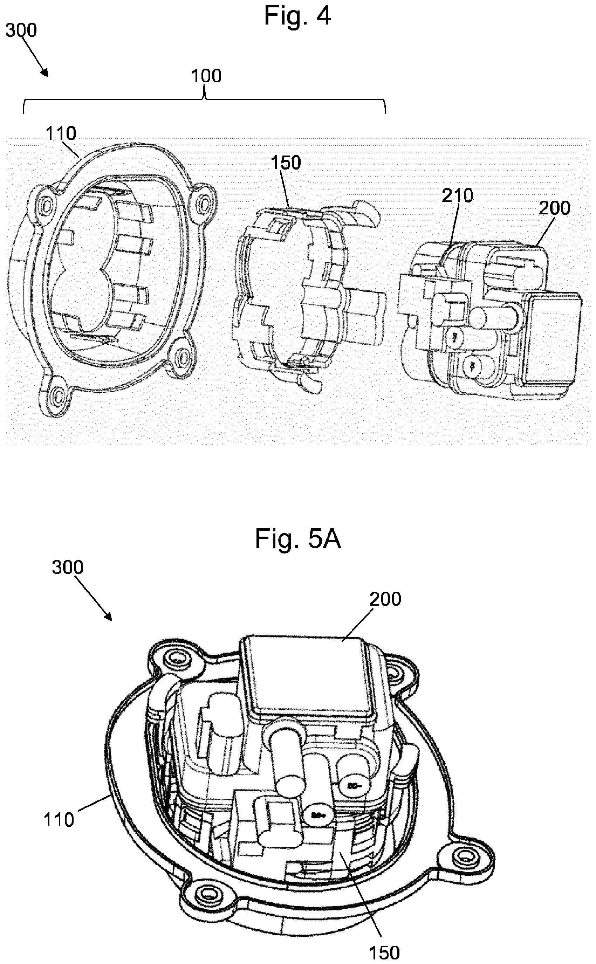

Fig. 4 zeigt eine Explosivdarstellung eines Haltesystems 300 zur Montage einer Ladeeinrichtung, beispielsweise in einem Kraftfahrzeug. Das Haltesystem 300 umfasst eine Grundplatte 110 und einen Sicherungsrahmen 150, die zusammen eine Haltevorrichtung 100 wie vorangehend beschrieben bilden. Das Haltesystem 300 umfasst ferner eine elektrische Ladeeinrichtung 200, die zum Halten mittels der Haltevorrichtung 100 vorgesehen ist. Dazu umfasst die Ladeeinrichtung 200 eine Rastkontur 210, und die Rasthaken 114 der Grundplatte 110 sind zur Verrastung mit der Rastkontur 210 ausgebildet. Die elektrische Ladeeinrichtung 200 ist beispielsweise eine Ladeeinrichtung für ein elektrisch angetriebenes Kraftfahrzeug.

Fign. 5A bis 5C zeigen schematische Darstellungen verschiedener Ansichten eines Haltesystems 300 in zusammengefügtem Zustand.

Fig. 5A zeigt eine perspektivische Ansicht des Haltesystems 300. Erkennbar ist dabei das teilweise Umschließen der Ladeeinrichtung 200 durch die Grundplatte 110 sowie durch den Sicherungsrahmen 150. Bei der dargestellten Ladeeinrichtung 200 ist ein Kontaktbereich zur Kontaktierung mittels einer Ladestromquelle an einer Unterseite der Ladeeinrichtung 200 vorgesehen, die mittels des Durchbruchs 116 der Grundplatte 110 zugängig ist.

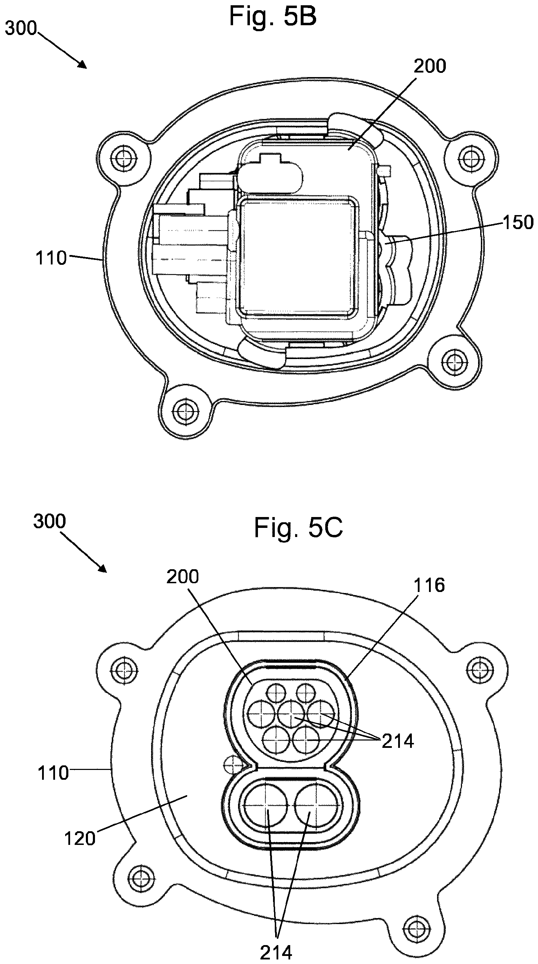

Fig. 5B zeigt eine Draufsicht auf das Haltesystem 300. Erkennbar ist die Anordnung der Befestigungselemente 118 sowie der Bedienelemente 158 des Sicherungsrahmens 150 in Bezug auf die Grundplatte 110.

Fig. 5C zeigt eine Untersicht des Haltesystems 300. Dargestellt sind mehrere Kontaktelemente 214 an der Unterseite der Ladeeinrichtung 200. Die Kontaktelemente 214 sind durch den Durchbruch 116 der Grundplatte 110 zugängig, beispielsweise zur Kontaktierung mittels einer Ladestromquelle. Erkennbar ist zudem eine angepasste Anordnung des Durchbruchs 116 und der Kontaktelemente 214 in Bezug auf einander. In dem dargestellten Beispiel verläuft eine Steckrichtung der Ladeeinrichtung parallel zu der Erstreckungsrichtung der Rasthaken 114 der Haltevorrichtung. Auf diese Weise ist eine Stabilität des Haltesystems 300, beispielsweise bei einem Bilden oder Lösen einer Steckverbindung mit der Ladestromquelle, begünstigt.

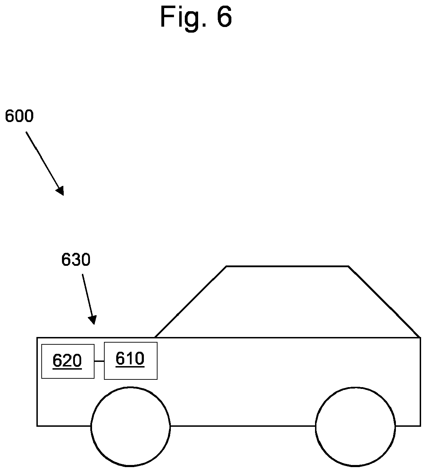

Fig. 6 zeigt eine schematische Darstellung eines Kraftfahrzeugs 600. Das Kraftfahrzeug 600 umfasst ein Haltesystem 630 zum Halten einer elektrischen Ladeeinrichtung, wie vorangehend beschrieben. Das Haltesystem 630 umfasst insbesondere eine Haltevorrichtung 610 und eine in der Haltevorrichtung 610 gehaltene elektrische Ladeeinrichtung 620. Die elektrische Ladeeinrichtung 620 ist beispielsweise dazu vorgesehen, durch Kontaktierung mit einer Ladestromquelle einen Energievorrat in dem Kraftfahrzeug 600 zum Antrieb des Kraftfahrzeugs 600 aufzuladen.

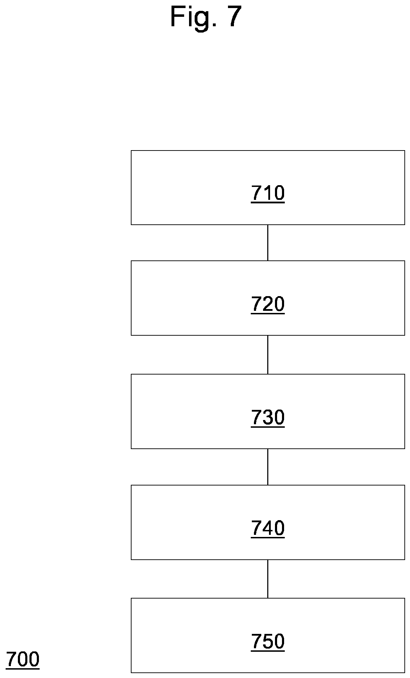

Fig. 7 zeigt ein Flussdiagramm eines Verfahrens 700 zur Montage einer Ladeeinrichtung in einem Kraftfahrzeug. Bei der Ladeeinrichtung handelt es sich beispielsweise um eine Ladeeinrichtung zum Aufladen eines Energievorrats in dem Kraftfahrzeug, wie vorangehend beschrieben.

Das Verfahren 700 umfasst ein Bereitstellen einer Haltevorrichtung, Schritt 710. Bei der Haltevorrichtung handelt es sich beispielsweise um eine Haltevorrichtung wie im Zusammenhang mit den vorangehenden Figuren beschrieben. Das Verfahren 700 umfasst ferner ein Bereitstellen einer Ladeeinrichtung, Schritt 720. Die Ladeeinrichtung weist wenigstens eine Rastkontur auf, und wenigstens ein Rasthaken der Haltevorrichtung ist zur Verrastung mit der Rastkontur der Ladeeinrichtung ausgebildet. Das Verfahren 700 umfasst ferner ein Befestigen der Haltevorrichtung an einer Karosserie des Kraftfahrzeugs, Schritt 730. Nach Befestigen der Haltevorrichtung umfasst das Verfahren 700 ein Anordnen der Ladeeinrichtung in der Haltevorrichtung, Schritt 740. Bei dem Anordnen der Ladeeinrichtung in der Haltevorrichtung befindet sich der Sicherungsrahmen der Haltevorrichtung in der ersten Position. Das Verfahren 700 umfasst ferner ein Bewegen des Sicherungsrahmens in die zweite Position, Schritt 750. Dies erfolgt derart, dass eine gesicherte Verrastung des oder der Rasthaken der Haltevorrichtung mit der Rastkontur der Ladeeinrichtung erfolgt.

Die vorangehend beschriebenen Techniken gestatten eine einfache, beispielsweise kraftlose, Montage einer Ladeeinrichtung in einem Kraftfahrzeug. Durch die Möglichkeit einer leichten Vorverrastung einer in die Haltevorrichtung eingesetzten Ladeeinrichtung kann eine Montage der Ladeeinrichtung weiter vereinfacht werden. Gleichzeitig gewährleisten die beschriebenen Techniken eine sichere Verbindung der Ladeeinrichtung mit der Haltevorrichtung. Die beschriebenen Techniken sind zudem vielseitig anwendbar. Insbesondere brauchen für eine optimierte Verwendung derselben Ladeeinrichtung mit unterschiedlichen Fahrzeugtypen lediglich gegebenenfalls unterschiedliche Grundplatten für die Haltevorrichtung bereitgestellt zu werden. Gleichzeitig sind die beschriebenen Techniken mit unterschiedlichen Ladeeinrichtung verwendbar, wobei gegebenenfalls lediglich entsprechend ausgebildete Grundplatten und/oder Sicherungsrahmen bereitgestellt zu werden brauchen.

### Bezugszeichenliste

- 100, 610: Haltevorrichtung
- 110: Grundplatte
- 112: Oberseite
- 114: Rasthaken
- 116: Durchbruch
- 118: Befestigungselement
- 120: Unterseite
- 150: Sicherungsrahmen
- 152: Spannkontur
- 154: Sicherungskontur
- 156: Aussparung
- 158: Bedienlasche
- 160: Verriegelungsrasthaken
- 200, 620: Ladeeinrichtung
- 210: Rastkontur
- 212: Verriegelungsrastkontur
- 214: Kontaktelement
- 300, 630: Haltesystem
- 600: Kraftfahrzeug
- 700: Verfahren
- 710-750: Verfahrensschritte

## Patentansprüche

1. Haltevorrichtung (100; 610) zum Halten einer elektrischen Ladeeinrichtung (200; 620), welche eine Grundplatte (110) mit einer Oberseite (112) und wenigstens einem Rasthaken (114), der sich ausgehend von der Oberseite (112) der Grundplatte (110) erstreckt und der zur Verrastung mit einer Rastkontur (210) der Ladeeinrichtung (200; 620) vorgesehen ist, aufweist, **gekennzeichnet durch** einen Sicherungsrahmen (150), der zwischen einer ersten Position und einer zweiten Position beweglich an der Grundplatte (110) angebracht ist und der dazu ausgebildet ist, in der ersten Position den Rasthaken (114) in eine geöffnete Stellung zu spannen und in der zweiten Position den Rasthaken (114) in einer geschlossenen Stellung zu sichern.

2. Haltevorrichtung (100; 610) nach Anspruch 1, **dadurch gekennzeichnet, dass** die Grundplatte (110) mehrere Rasthaken (114) aufweist.

3. Haltevorrichtung (100; 610) nach Anspruch 1 oder 2, **dadurch gekennzeichnet, dass** der Sicherungsrahmen (150) wenigstens eine Spannkontur (152) zum Spannen des Rasthakens (114) in die geöffnete Stellung und wenigstens eine Sicherungskontur (154) zum Sichern des Rasthakens (114) in der geschlossenen Stellung umfasst.

4. Haltevorrichtung (100; 610) nach Anspruch 3, **dadurch gekennzeichnet, dass** der Sicherungsrahmen (150) wenigstens eine Aussparung (156) aufweist und derart an der Grundplatte (110) angebracht ist, dass der Rasthaken (114) wenigstens teilweise in die Aussparung (156) ragt, wenn sich der Sicherungsrahmen (150) in der ersten Position befindet.

5. Haltevorrichtung (100; 610) nach einem der vorhergehenden Ansprüche, **dadurch gekennzeichnet, dass** ein Wechsel von der ersten Position zu der zweiten Position des Sicherungsrahmens (150) einer Bewegung des Sicherungsrahmens (150) zumindest im Wesentlichen senkrecht zu der Oberseite (112) entspricht.

6. Haltevorrichtung (100; 610) nach Anspruch 5, **dadurch gekennzeichnet, dass** die Bewegung einer Bewegung in einer von der Oberseite (112) fortweisenden Richtung entspricht.

7. Haltevorrichtung (100; 610) nach einem der vorhergehenden Ansprüche, **dadurch gekennzeichnet, dass** die Grundplatte (110) wenigstens ein Befestigungselement (118) zur Befestigung der Haltevorrichtung (100; 610) aufweist.

8. Haltevorrichtung (100; 610) nach Anspruch 7, **dadurch gekennzeichnet, dass** die Ladeeinrichtung (200; 620) eine Ladeeinrichtung (200; 620) für ein elektrisch angetriebenes Kraftfahrzeug (600) ist und das Befestigungselement (118) zur Befestigung der Haltevorrichtung (100; 610) in dem Kraftfahrzeug (600) ausgebildet ist.

9. Haltevorrichtung (100; 610) nach einem der vorhergehenden Ansprüche, **dadurch gekennzeichnet, dass** der Sicherungsrahmen (150) wenigstens einen Verriegelungsrasthaken (160) umfasst, der ausgebildet ist zur Verrastung mit einer Verriegelungsrastkontur (212) der Ladeeinrichtung (200; 620), wenn sich der Sicherungsrahmen (150) in der zweiten Position befindet, um den Sicherungsrahmen (150) in der zweiten Position zu verriegeln.

10. Haltevorrichtung (100; 610) nach einem der vorhergehenden Ansprüche, **dadurch gekennzeichnet, dass** der Sicherungsrahmen (150) wenigstens eine Bedienlasche (158) zum manuellen Bewegen des Sicherungsrahmens (150) von der ersten Position in die zweite Position umfasst.

11. Haltevorrichtung (100; 610) nach einem der vorhergehenden Ansprüche, **dadurch gekennzeichnet, dass** die Grundplatte (110) wenigstens einen Durchbruch (116) aufweist, der dazu ausgebildet ist, einen Zugang zu der Ladeeinrichtung (200; 620) von einer Unterseite (120) der Grundplatte (110) aus zu gestatten, wenn die Ladeeinrichtung (200; 620) mittels der Haltevorrichtung (100; 610) gehalten ist.

12. Haltesystem (300; 630), mit einer Haltevorrichtung (100; 610) nach einem der vorhergehenden Ansprüche und einer Ladeeinrichtung (200; 620) mit wenigstens einer Rastkontur (210), wobei der wenigstens eine Rasthaken (114) der Haltevorrichtung (100; 610) zur Verrastung mit der Rastkontur (210) der Ladeeinrichtung (200; 620) ausgebildet ist.

13. Haltesystem (300; 630) nach Anspruch 12 mit einer Haltevorrichtung (100; 610) nach Anspruch 11, **dadurch gekennzeichnet, dass** die Ladeeinrichtung (200; 620) den Durchbruch (116) der Grundplatte (110) wenigstens teilweise durchragt, wenn die Ladeeinrichtung (200; 620) mittels der Haltevorrichtung (100; 610) gehalten ist.

14. Haltesystem (300; 630) nach Anspruch 12 oder 13, **dadurch gekennzeichnet, dass** die Ladeeinrichtung (200; 620) wenigstens ein Kontaktelement (214) umfasst, das an einer der Oberseite (112) der Grundplatte (110) zugewandten Seite der Ladeeinrichtung (200; 620) angeordnet ist und das zur Kontaktierung mittels einer Ladestromquelle vorgesehen ist.

15. Haltesystem (300; 630) nach einem der Ansprüche 12 bis 14, **dadurch gekennzeichnet, dass** sich der wenigstens eine Rasthaken (114) parallel zu einer Steckrichtung der Ladeeinrichtung (200; 620) erstreckt.

16. Kraftfahrzeug (600) umfassend eine Haltevorrichtung (610) nach einem der Ansprüche 1 bis 11 und/oder ein Haltesystem (630) nach einem der Ansprüche 12 bis 15.

17. Verfahren (700) zur Montage einer Ladeeinrichtung (200; 620) in einem Kraftfahrzeug (600) **gekennzeichnet durch** die Schritte:
- Bereitstellen (710) einer Haltevorrichtung (100; 610), die eine Grundplatte (110) umfasst mit einer Oberseite (112) und wenigstens einem Rasthaken (114), der sich ausgehend von der Oberseite (112) der Grundplatte (110) erstreckt und der zur Verrastung mit einer Rastkontur (210) der Ladeeinrichtung (200; 620) vorgesehen ist, und einen Sicherungsrahmen (150), der zwischen einer ersten Position und einer zweiten Position beweglich an der Grundplatte (110) angebracht ist und der dazu ausgebildet ist, in der ersten Position den Rasthaken (114) in eine geöffnete Stellung zu spannen und in der zweiten Position den Rasthaken (114) in einer geschlossenen Stellung zu sichern;
- Bereitstellen (720) einer Ladeeinrichtung (200; 620) mit wenigstens einer Rastkontur (210), wobei der wenigstens eine Rasthaken (114) der Haltevorrichtung (100; 610) zur Verrastung mit der Rastkontur (210) der Ladeeinrichtung (200; 620) ausgebildet ist;
- Befestigen (730) der Haltevorrichtung (100; 610) an einer Karosserie des Kraftfahrzeugs;
- Anordnen (740) der Ladeeinrichtung (200; 620) in der Haltevorrichtung (100; 610), wobei sich der Sicherungsrahmen (150) in der ersten Position befindet, und
- Bewegen (750) des Sicherungsrahmens (150) in die zweite Position zum Bilden einer gesicherten Verrastung des Rasthakens (114) mit der Rastkontur (210).

## Claims

1. Holding apparatus (100; 610) for holding an electrical charging device (200; 620), comprising a base plate (110) with an upper side (112) and at least one latching hook (114) which extends from the upper side (112) of the base plate (110) and is provided for latching with a latching contour (210) of the charging device (200; 620), **characterized by** a securing frame (150) which is mounted on the base plate (110) so as to be movable between a first position and a second position and is designed to load the latching hook (114) into an open position in the first position and to secure the latching hook (114) in a closed position in the second position.

2. Holding apparatus (100; 610) according to Claim 1, **characterized in that** the base plate (110) has multiple latching hooks (114).

3. Holding apparatus (100; 610) according to Claim 1 or 2, **characterized in that** the securing frame (150) comprises at least one loading contour (152) for loading the latching hook (114) into the open position and at least one securing contour (154) for securing the latching hook (114) in the closed position.

4. Holding apparatus (100; 610) according to Claim 3, **characterized in that** the securing frame (150) has at least one cutout (156) and is mounted on the base plate (110) in such a way that the latching hook (114) at least partially projects into the cutout (156) when the securing frame (150) is in the first position.

5. Holding apparatus (100; 610) according to one of the preceding claims, **characterized in that** a change from the first position to the second position of the securing frame (150) corresponds to a movement of the securing frame (150) at least substantially perpendicularly to the upper side (112).

6. Holding apparatus (100; 610) according to Claim 5, **characterized in that** the movement corresponds to a movement in a direction away from the upper side (112) .

7. Holding apparatus (100; 610) according to one of the preceding claims, **characterized in that** the base plate (110) has at least one fastening element (118) for fastening the holding apparatus (100; 610).

8. Holding apparatus (100; 610) according to Claim 7, **characterized in that** the charging device (200; 620) is a charging device (200; 620) for an electrically driven motor vehicle (600) and the fastening element (118) is designed for fastening the holding apparatus (100; 610) in the motor vehicle (600).

9. Holding apparatus (100; 610) according to one of the preceding claims, **characterized in that** the securing frame (150) comprises at least one locking latching hook (160) which is designed for latching with a locking latching contour (212) of the charging device (200; 620), when the securing frame (150) is in the second position, in order to lock the securing frame (150) in the second position.

10. Holding apparatus (100; 610) according to one of the preceding claims, **characterized in that** the securing frame (150) comprises at least one operating tab (158) for manually moving the securing frame (150) from the first position to the second position.

11. Holding apparatus (100; 610) according to one of the preceding claims, **characterized in that** the base plate (110) has at least one aperture (116) which is designed to create an access to the charging device (200; 620) from a lower side (120) of the base plate (110) when the charging device (200; 620) is held by means of the holding apparatus (100; 610) .

12. Holding system (300; 630) comprising a holding apparatus (100; 610) according to one of the preceding claims and a charging device (200; 620) with at least one latching contour (210), wherein the at least one latching hook (114) of the holding apparatus (100; 610) is designed for latching with the latching contour (210) of the charging device (200; 620).

13. Holding system (300; 630) according to Claim 12 comprising a holding apparatus (100; 610) according to Claim 11, **characterized in that** the charging device (200; 620) at least partially projects through the aperture (116) in the base plate (110) when the charging device (200; 620) is held by means of the holding apparatus (100; 610).

14. Holding system (300; 630) according to Claim 12 or 13, **characterized in that** the charging device (200; 620) comprises at least one contact element (214) which is arranged on a side of the charging device (200; 620) facing the upper side (112) of the base plate (110) and is provided for contacting by means of a charging current source.

15. Holding system (300; 630) according to one of Claims 12 to 14, **characterized in that** the at least one latching hook (114) extends parallel to a plug-in direction of the charging device (200; 620).

16. Motor vehicle (600) comprising a holding apparatus (610) according to one of Claims 1 to 11 and/or a holding system (630) according to one of Claims 12 to 15.

17. Method (700) for mounting a charging device (200; 620) in a motor vehicle (600), **characterized by** the steps:
- providing (710) a holding apparatus (100; 610) comprising a base plate (110) with an upper side (112) and at least one latching hook (114) which extends from the upper side (112) of the base plate (110) and is provided for latching with a latching contour (210) of the charging device (200; 620) and a securing frame (150) which is mounted on the base plate (110) so as to be movable between a first position and a second position and is designed to load the latching hook (114) into an open position in the first position and to secure the latching hook (114) in a closed position in the second position;
- providing (720) a charging device (200; 620) with at least one latching contour (210), wherein the at least one latching hook (114) of the holding apparatus (100; 610) is designed for latching with the latching contour (210) of the charging device (200; 620);
- fastening (730) the holding apparatus (100; 610) to a body of the motor vehicle;
- arranging (740) the charging device (200; 620) in the holding apparatus (100; 610), wherein the securing frame (150) is in the first position, and
- moving (750) the securing frame (150) to the second position so as to form a secured latching of the latching hook (114) with the latching contour (210).

## Revendications

1. Dispositif de maintien (100 ; 610) servant au maintien d'un équipement de charge électrique (200 ; 620), lequel présente une plaque de base (110) dotée d'un côté supérieur (112) et d'au moins un crochet d'encliquetage (114) qui s'étend à partir du côté supérieur (112) de la plaque de base (110) et qui est prévu pour l'encliquetage avec un contour d'encliquetage (210) de l'équipement de charge (200 ; 620), **caractérisé par** un cadre de blocage (150) qui est installé sur la plaque de base (110) de manière mobile entre une première position et une deuxième position et qui est conçu pour serrer le crochet d'encliquetage (114) dans une position ouverte dans la première position et pour bloquer le crochet d'encliquetage (114) dans une position fermée dans la deuxième position.

2. Dispositif de maintien (100 ; 610) selon la revendication 1, **caractérisé en ce que** la plaque de base (110) présente plusieurs crochets d'encliquetage (114).

3. Dispositif de maintien (100 ; 610) selon la revendication 1 ou 2, **caractérisé en ce que** le cadre de blocage (150) comprend au moins un contour de serrage (152) servant au serrage du crochet d'encliquetage (114) dans la position ouverte et au moins un contour de blocage (154) servant au blocage du crochet d'encliquetage (114) dans la position fermée.

4. Dispositif de maintien (100 ; 610) selon la revendication 3, **caractérisé en ce que** le cadre de blocage (150) présente au moins un évidement (156) et est installé sur la plaque de base (110) de telle sorte que le crochet d'encliquetage (114) fasse saillie au moins partiellement dans l'évidement (156) lorsque le cadre de blocage (150) se trouve dans la première position.

5. Dispositif de maintien (100 ; 610) selon l'une des revendications précédentes, **caractérisé en ce qu'**un changement de la première position à la deuxième position du cadre de blocage (150) correspond à un déplacement du cadre de blocage (150) au moins sensiblement perpendiculairement au côté supérieur (112).

6. Dispositif de maintien (100 ; 610) selon la revendication 5, **caractérisé en ce que** le déplacement correspond à un déplacement dans une direction s'éloignant du côté supérieur (112).

7. Dispositif de maintien (100 ; 610) selon l'une des revendications précédentes, **caractérisé en ce que** la plaque de base (110) présente au moins un élément de fixation (118) servant à la fixation du dispositif de maintien (100 ; 610).

8. Dispositif de maintien (100 ; 610) selon la revendication 7, **caractérisé en ce que** l'équipement de charge (200 ; 620) est un équipement de charge (200 ; 620) pour un véhicule automobile (600) à propulsion électrique et l'élément de fixation (118) est conçu pour la fixation du dispositif de maintien (100 ; 610) dans le véhicule automobile (600).

9. Dispositif de maintien (100 ; 610) selon l'une des revendications précédentes, **caractérisé en ce que** le cadre de blocage (150) comprend au moins un crochet d'encliquetage de verrouillage (160) qui est conçu pour le verrouillage avec un contour d'encliquetage de verrouillage (212) de l'équipement de charge (200 ; 620) lorsque le cadre de blocage (150) se trouve dans la deuxième position, afin de verrouiller le cadre de blocage (150) dans la deuxième position.

10. Dispositif de maintien (100 ; 610) selon l'une des revendications précédentes, **caractérisé en ce que** le cadre de blocage (150) comprend au moins une languette de commande (158) servant au déplacement manuel du cadre de blocage (150) de la première position à la deuxième position.

11. Dispositif de maintien (100 ; 610) selon l'une des revendications précédentes, **caractérisé en ce que** la plaque de base (110) présente au moins une ouverture (116) qui est conçue pour permettre un accès à l'équipement de charge (200 ; 620) à partir d'un côté inférieur (120) de la plaque de base (110) lorsque l'équipement de charge (200 ; 620) est maintenu au moyen du dispositif de maintien (100 ; 610).

12. Système de maintien (300 ; 630), comportant un dispositif de maintien (100 ; 610) selon l'une des revendications précédentes et un équipement de charge (200 ; 620) comportant au moins un contour d'encliquetage (210), l'au moins un crochet d'encliquetage (114) du dispositif de maintien (100 ; 610) étant conçu pour l'encliquetage avec le contour d'encliquetage (210) de l'équipement de charge (200 ; 620).

13. Système de maintien (300 ; 630) selon la revendication 12 comportant un dispositif de maintien (100 ; 610) selon la revendication 11, **caractérisé en ce que** l'équipement de charge (200 ; 620) traverse au moins partiellement l'ouverture (116) de la plaque de base (110) lorsque l'équipement de charge (200 ; 620) est maintenu au moyen du dispositif de maintien (100 ; 610).

14. Système de maintien (300 ; 630) selon la revendication 12 ou 13, **caractérisé en ce que** l'équipement de charge (200 ; 620) comprend au moins un élément de contact (214) qui est agencé sur un côté de l'équipement de charge (200 ; 620) qui est tourné vers le côté supérieur (112) de la plaque de base (110) et qui est prévu pour la mise en contact avec une source de courant de charge.

15. Système de maintien (300 ; 630) selon l'une des revendications 12 à 14, **caractérisé en ce que** l'au moins un crochet d'encliquetage (114) s'étend parallèlement à une direction d'enfichage de l'équipement de charge (200 ; 620).

16. Véhicule automobile (600) comprenant un dispositif de maintien (610) selon l'une des revendications 1 à 11 et/ou un système de maintien (630) selon l'une des revendications 12 à 15.

17. Procédé (700) de montage d'un équipement de charge (200 ; 620) dans un véhicule automobile (600), **caractérisé par** les étapes suivantes :
- fourniture (710) d'un dispositif de maintien (100 ; 610) qui comprend une plaque de base (110) dotée d'un côté supérieur (112) et d'au moins un crochet d'encliquetage (114) qui s'étend à partir du côté supérieur (112) de la plaque de base (110) et qui est prévu pour l'encliquetage avec un contour d'encliquetage (210) de l'équipement de charge (200 ; 620), et un cadre de blocage (150) qui est installé sur la plaque de base (110) de manière mobile entre une première position et une deuxième position et qui est conçu pour serrer le crochet d'encliquetage (114) dans une position ouverte dans la première position et pour bloquer le crochet d'encliquetage (114) dans une position fermée dans la deuxième position ;
- fourniture (720) d'un équipement de charge (200 ; 620) comportant au moins un contour d'encliquetage (210), l'au moins un crochet d'encliquetage (114) du dispositif de maintien (100 ; 610) étant conçu pour l'encliquetage avec le contour d'encliquetage (210) de l'équipement de charge (200 ; 620) ;
- fixation (730) du dispositif de maintien (100 ; 610) à une carrosserie du véhicule automobile ;
- agencement (740) de l'équipement de charge (200 ; 620) dans le dispositif de maintien (100 ; 610), le cadre de blocage (150) se trouvant dans la première position, et
- déplacement (750) du cadre de blocage (150) dans la deuxième position pour la formation d'un encliquetage bloqué du crochet d'encliquetage (114) avec le contour d'encliquetage (210).
